## Europäisches Patentamt
## European Patent Office
## Office européen des brevets

(11) Veröffentlichungsnummer: **0 445 543 A1**

# EUROPÄISCHE PATENTANMELDUNG

(21) Anmeldenummer: **91101681.4**

(51) Int. Cl.⁵: **C01F 7/14**

(22) Anmeldetag: **07.02.91**

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

Ein Antrag gemäss Regel 88 EPÜ auf Hinzufügung von in der Beschreibung fehlendem Text liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: **07.02.90 HU 70990**

(43) Veröffentlichungstag der Anmeldung:
**11.09.91 Patentblatt 91/37**

(84) Benannte Vertragsstaaten:
**CH DE FR GB IT LI**

(71) Anmelder: **VEREINIGTE ALUMINIUM-WERKE AKTIENGESELLSCHAFT**
**Georg-von-Boeselager-Strasse 25**
**W-5300 Bonn 1(DE)**

(72) Erfinder: **Brown Neil, Dr.**
**Am Heerwege 2**
**W-5010 Bergheim(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**W-5300 Bonn 1(DE)**

(54) **Verfahren zur Herstellung von grobkörnigen Aluminiumhydroxid-Partikeln.**

(57) Es wird ein Verfahren zur Herstellung von grobkörnigen Aluminiumhydroxid-Partikelnaus einer alkalischen Aluminatlauge des Bayer-Prozesses vorgestellt. Dieses Verfahren beinhaltet die Schritte der Aufteilung der alkalischen Aluminatlauge in zwei Teilströme, wobei der eine Teilstrom in den Agglomerationsabschnitt und der andere in den Wachstumsabschnitt geleitet wird.

Ein Feinimpfer, bestehend aus gemahlenen Impferpartikeln und einem neuen Partikelniederschlag, und eine calciumhaltige Verbindung werden in kleinen Mengen in den Agglomerationsabschnitt zur Bildung von Agglomeraten zugegeben. Die Agglomerate werden abgetrennt und in den Laugenstrom eingeleitet, der in den Wachstumsabschnitt eingespeist wird. Während der Ausrührung wird der Wachstumsteilstrom zur Bildung eines Produkt-Hydroxids abgekühlt. Dieses wird zu einem feinen Impfer gemahlen und rückgeführt, wobei eine Dünnlauge zurückbleibt. Ein Teil des Produktes wird zu der teilzersetzten Lauge zugegeben, wodurch der gemahlene Impfer desaktiviert wird und ein neuer Niederschlag entsteht.

Der gemahlene Impfer und der neue Niederschlag werden abgetrennt. Ein Teil wird dem Agglomerationsabschnitt zugeführt und ein Teil der teilzersetzten Lauge, wodurch der Ausrührzyklus geschlossen wird.

## VERFAHREN ZUR HERSTELLUNG VON GROBKÖRNIGEN ALUMINIUMHYDROXID-PARTIKELN

Die vorliegende Erfindung betrifft ein Verfahren zur Herstellung von grobkörnigen Aluminiumhydroxid-Partikeln aus einer alkalischen Aluminatlauge des Bayer-Prozesses, das die folgenden Schritten umfaßt:

a) Aufteilung einer übersättigten alkalischen Aluminatlauge des Bayer-Prozesses in einen ersten und zweiten Teilstrom

b) Einleiten des ersten Teilstromes in einen Agglomerationsabschnitt unter Zugabe eines Feinimpfers, bestehend aus einem desaktivierten Mahlimpfer und frisch gefällten $Al(OH)_3$-Partikeln

c) Ausrühren des ersten Teilstromes, bis ein Molverhältnis $Na_2O$ zu $Al_2O_3$ von mindestens 2,10 in der Lauge erreicht ist und ein Grobimpfer, bestehend aus agglomerierten $Al(OH)_3$-Partikeln, gebildet wird

d) Abtrennung des Grobimpfers aus dem ersten Teilstrom, wobei eine teilzersetzte Lauge zurückbleibt

e) Zugabe des Grobimpfers in den zweiten Teilstrom, der in den Wachstumsabschnitt eingeleitet wird

f) Ausrühren des zweiten Teilstromes unter Bildung von $Al(OH)_3$-Produktpartikeln

g) Abtrennung der $Al(OH)_3$-Produktpartikel aus dem zweiten Teilstrom, wobei eine Dünnlauge zurückbleibt

h) Mahlen eines Teils der $Al(OH)_3$-Produktpartikel zu einem Mahlimpfer mit den Abmessungen eines Feinimpfers

i) Zugabe des Mahlimpfers zu der teilzersetzten Lauge [aus Verfahrensschritt d)], die in einen Desaktivierungsabschnitt eingeleitet wird

j) Ausrühren der teilzersetzten Lauge unter Bildung eines Feinimpfers, bestehend aus desaktiviertem Mahlimpfer und frisch gefällten $Al(OH)_3$-Partikeln

k) Abtrennung des Feinimpfers, wobei Dünnlauge zurückbleibt

l) Rückführung des Feinimpfers in den ersten Teilstrom

Ein derartiges Verfahren ist aus der EP 0 344 469 bekannt, die weiter unten näher erläutert wird.

Das grundlegende Prinzip des Ausrührschrittes im Bayer-Prozeß zur Gewinnung von Aluminiumoxid aus Bauxit ist die Herstellung eines agglomerierten Aluminiumhydroxid ($Al(OH)_3$)-Produktes, das nach Kalzinierung zu Aluminiumoxid < 10 Gew.-% Partikel mit einem Durchmesser < 45 $\mu$m enthält. Während der Ausrührung wird eine alkalische Aluminatlauge mit niedrigem Molverhältnis ($Na_2O/Al_2O_3$) mit vorausgerührtem $Al(OH)_3$ geimpft. Die Impferpartikel agglomerieren zunächst und wachsen dann zu festem grobkörnigem $Al(OH)_3$.

Die grobkörnigen $Al(OH)_3$-Teilchen müssen eine ausreichende Festigkeit aufweisen, um den Zerfalls- und Abriebskräften widerstehen zu können, denen sie in den nachfolgenden Operationen des Transports und der Kalzinierung zu Aluminiumoxid ausgesetzt sind; vgl. z. B. "Process for Producing Coarse Grains of Aluminum Hydroxide", K. Yamada, T. Harato, H. Katz und Y. Shiozaki, US Patent Nr. 4,311,486; erteilt am 19.01.1982.

Gemäß dem Yamada et al.-Patent heißt es:

"... wenn es sich bei den groben Körnern des $Al(OH)_3$ um Agglomerate von Einkristallen mit einer Größen von 10 - 30 $\mu$m handelt, wird eine gute Beständigkeit gegenüber der Zerkleinerung bei der Kalzinierung erzielt."

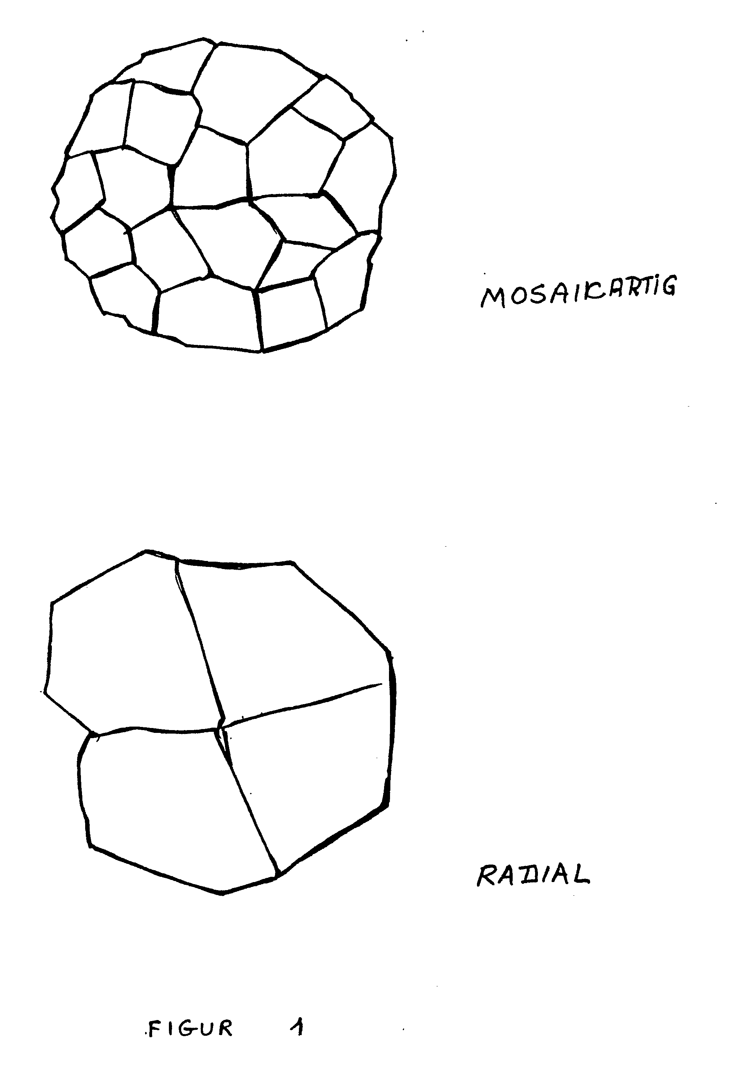

Deshalb ist die gewünschte Partikelstruktur die eines mosaikartigen Agglomerats, das aus einer relativ großen Anzahl an Einzelkristallen in mehr oder weniger zufälliger Orientierung im Gegensatz zu dem radialen Typ des $Al(OH)_3$ besteht. Die Partikel bestehen aus einer relativ kleinen Anzahl großer Einzelkristalle, die entsprechend dem Kristallwachstums orientiert sind (s. Figur 1 schematische Gegenüberstellung der beiden Strukturen). Der Grad an mosaikartigem Charakter kann quantitativ durch die Zahl der Einzelkristalle innerhalb eines Agglomerats von spezifischer Größe definiert werden.

Der schnelle Temperaturanstieg während der Kalzinierung führt zur Bildung eines Dampfdrucks innerhalb der Partikel, der die großen Einkristalle zerstört, d.h. daß große, kompakte-Monokristalle zu einer Zerkleinerung des geschwächten kalzinierten Produktes führen. Zusätzlich, aufgrund der Art und Weise wie sich radiale Partikel bilden, d. h. hauptsächlich infolge eines Kristallwachstumsmechanismus, weisen sie in der Hydroxidform eine hohe physikalische Festigkeit auf. Folglich sind radiale $Al(OH)_3$-Partikel fester als mosaikartige Partikel derselben Gesamtgröße, gemessen an der Bruchfestigkeit während den normalen Verfahrensoperationen, wie z. B. beim Umpumpen oder pneumatischen Transport etc.

Die bevorzugte Struktur für $Al(OH)_3$-Partikel mit optimaler Partikelfestigkeit ist daher ein "verfestigtes Mosaik". Mit anderen Worten: die gewünschten $Al(OH)_3$-Partikel müssen im wesentlichen mosaikartig sein, aber auch eine ausreichend hohe Festigkeit aufweisen, um den Übergang von der Ausrührung zur Kalzination zu überstehen.

Studien der $Al(OH)_3$-Partikelfestigkeit haben gezeigt, daß die zusätzliche Gegenwart kleiner Kristallite

2

(durch sekundäre Keimbildung erzeugt) in der Partikelstruktur zur Auffüllung von Hohlräumen in der Partikelstruktur die Festigkeit des Produkts weiter erhöht; vgl. z. B. "Factors Affecting the Attrition Strength of Alumina Products", J. V. Sang. AIME Light Metals Conf. Proc., S. 121 - 128, 1987.

Die modernen Ausrührverfahren haben die Herstellung von verfestigten mosaikartigen Partikeln des Al-$(OH)_3$ zum Ziel. Dies wird deutlich am Beispiel des Alusuisse-Verfahrens im US-Patent Nr. 4,234,559 "Process for the Manufacture of Coarse Aluminum Hydroxide", O. Tschamper, erteilt am 18. November 1980, Inhaber, Swiss Aluminium Ltd.

Das Alusuisse-Verfahren weist die folgenden Hauptmerkmale auf:

- hohe Temperatur der alkalischen Aluminatlauge;
- Feinimpferagglomeration in Laugen bei hoher Temperatur;
- Zugabe von grobem Impfer bei niedriger Temperatur zu der teilzersetzten Lauge der Agglomerationsstufe;
- Kristallwachstum und Bildung neuer Kristalle (durch sekundäre Keimbildung) in der Lauge bei niedriger Temperatur;
- Abtrennung der neuen Kristalle und feinere Fraktion der groben Partikel aus dem Ausrührprodukt durch Klassierung.

Obwohl die jetzige Ausrührtechnologie und Praxis die Ziele wie beispielsweise hohe Laugenproduktivität (Laugenproduktivität ist die Menge des ausgerührten Aluminiumoxids pro Volumeneinheit der alkalischen Aluminatlauge) und grobe Partikel mit verfestigter Mosaikstruktur erfüllt, weisen die bekannten Verfahren einige Nachteile auf. Ein Nachteil besteht darin, daß das Verhältnis des rückgeführten $Al(OH)_3$ zu Produkt-$Al(OH)_3$ im Ausrührverfahren 3:1 beträgt. Mit anderen Worten: von 4 Tonnen $Al(OH)_3$ aus dem Ausrührzyklus werden 3 Tonnen abgetrennt und als Impfer in die Ausrührung des $Al(OH)_3$ rückgeführt.

Es ist leicht zu verstehen, daß je größer der Gehalt an rückgeführtem $Al(OH)_3$ ist, desto niedriger das Gesamtpotential zur Bildung von Agglomeraten (oder Agglomerationspotential) des Systems ist (für eine gegebene Laugenproduktivität und Produktpartikelgröße). Je niedriger das Agglomerationspotential des Systems ist, desto niedriger ist der Grad an mosaikartigem Charakter des Produkt-$Al(OH)_3$, d. h. desto größer, im Durchschnitt, ist die Größe der Einzelkristalle innerhalb jedes agglomerierten Partikels.

Gemäß dem Verfahren in der EP-A 0 344 469 werden grobkörnige Agglomerate des $Al(OH)_3$ mit einem vergrößerten mosaikartigen Charakter und einer erhöhten Partikelfestigkeit in einem dreistufigen Ausrührverfahren, ausgehend von gemahlenem Impfer, hergestellt. Bei diesem Verfahren wird der Schritt, in dem die feinen Partikel gebildet werden, vom Wachstumsabschnitt getrennt, so daß die Hydroxidklassierung und Rückführung des $Al(OH)_3$ auf übliche Art und Weise nicht benötigt wird. Der Impfer für das Verfahren, der mechanisch hergestellt wird, indem ein Teil des Ausrührproduktes auf die Abmessungen eines Feinimpfers gemahlen wird (Durchschnitts-Partikelgröße 25-30 $\mu$m), wird zunächst in einer Lauge mit hohem Molverhältnis (d. h. niedrige Aluminiumoxidübersättigung) desaktiviert ("Desaktivierung" bedeutet Entfernung des Keimbildungspotentials der $Al(OH)_3$-Kristalle), so daß die Bildung von neuen feinen Kristallen in der Lauge mit niedrigem Molverhältnis in den Agglomerations- und Wachstumsausrührern vermieden wird.

Da der Impfer das gesamte Verfahren im wesentlichen nur einmal durchläuft und anschließend als Produkt ausgetragen wird, wird das Verhältnis des rückgeführten $Al(OH)_3$ zu Produkt-$Al(OH)_3$ drastisch auf 1:3 reduziert, ohne daß dabei die Laugenproduktivität oder Partikelfestigkeit, gemessen durch den Attrition-Index (AI), verloren geht.

Der Attrition-Index (AI) wird folgendermaßen definiert:

$$AI = \frac{[\text{Gew.-\%} > 45\ \mu\text{m}]\ \text{vor} - [\text{Gew.-\%} > 45\ \mu\text{m}]\ \text{danach}}{[\text{Gew.-\%} > 45\ \mu\text{m}]\ \text{vor}}$$

Der Attriton-Index-Test ist ein Abriebtest und kann in einem modifizierten Forsythe-Hertwig-Gerät (die Testdurchführung beschreibt D. J. Braun AIME Light Metal Conf. Proceedings 1984, S. 257 - 268) mit 50 g $Al(OH)_3$ durchgeführt werden, wobei die Korngrößenverteilung vor und nach dem Abriebtest bestimmt werden kann, beispielsweise mittels der Coulter-Counter-Methode.

Energie ist einer der größten Kostenfaktoren bei der Aluminiumoxidherstellung, wobei die Hälfte der elektrischen Energie bei der Bayer-Verfahrensanlage für das Umpumpen der Lauge und $Al(OH)_3$-Laugensuspensionen innerhalb des Verfahrens benötigt wird; vgl. z. B. "Prospects of Bayer Plant Energy Conservation" G. Lang, K. Solymar und J. Steiner. AIME Light Metals Conf. Proceedings, S. 201 - 214, 1981.

Das in der EP-A0 344 469 beschriebene Verfahren erzeugt grobe Partikel der gewünschten Partikelstrukturen, wobei gleichzeitig die Gesamtabmessungen des Ausrührzyklus reduziert werden, wodurch sich Ersparnisse bei Kapitalinvestitionen und Energieverbrauch ergeben.

Im Hinblick auf das oben genannte, benötigt die Technik ein weiter verbessertes Verfahren zur Herstellung grobkörnigerer Agglomerate des $Al(OH)_3$ mit erhöhtem mosaikartigem Charakter. Es besteht darüber hinaus der Bedarf an einem verbesserten Verfahren zur Rückgewinnung von $Al(OH)_3$ aus alkalischen Aluminatlaugen, bei dem das Verhältnis von rückgeführtem $Al(OH)_3$ zu Produkt-$Al(OH)_3$ weiter verringert wird.

## Zusammenfassung der Erfindung

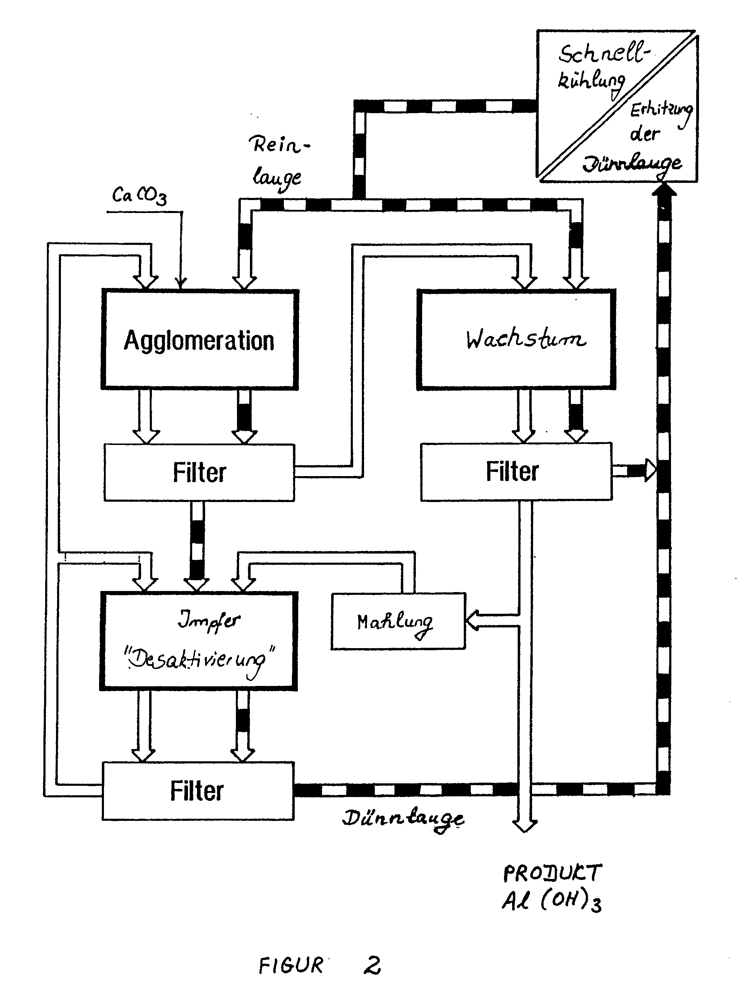

Das verbesserte Verfahren der vorliegenden Erfindung kann anhand der Figur 2 beispielhaft erläutert werden. Figur 2 zeigt eine schematische Darstellung des Ausrührzyklus der Erfindung. Die vorliegende Erfindung liefert ein Verfahren zur Ausrührung von grobkörnigem Aluminiumhydroxid unter Verwendung von gemahlenem Impfer, das folgende Verfahrensschritte umfaßt:

- Aufteilung der übersättigten alkalischen Aluminatlauge aus dem Bayer-Prozeß mit einer Temperatur von mind. 75 °C und einem Molverhältnis ($Na_2O$ alkalisch zu $Al_2O_3$) von weniger als 1,6 in zwei Ströme;
- Zugabe von feinen $Al(OH)_3$-Partikeln als Feinimpfer in einer Menge zwischen 20 g/l und 80 g/l zu dem ersten Laugenstrom sowie zwischen 10 mg/l und 100 mg/l einer calciumhaltigen Verbindung und anschließende Ausrührung, bis das Molverhältnis der Lauge mindestens 2,10 beträgt, wodurch Agglomerate gebildet werden, deren Partikelanteil mit einem Durchmesser < 45 $\mu$m nicht mehr als 10 Gew.-% < 45 $\mu$m beträgt;
- Abtrennung der Agglomerate aus der teilzersetzten Lauge und Zugabe der Agglomerate als Grobimpfer zum zweiten Strom der alkalischen Aluminatlauge mit einem Molverhältnis < 1,6 und Ausrührung unter Kühlung, bis das Molverhältnis der Lauge mindestens 2,10 erreicht, wodurch grobe verfestigte Produktpartikel entstehen, deren Partikelanteil mit einem Durchmesser < 45 $\mu$m nicht mehr als 5 Gew.-% beträgt;
- Abtrennung der groben verfestigten Produktpartikel aus der zersetzten Lauge;
- Mahlung eines Teils der Produktpartikel zu einem Mahlimpfer mit den Abmessungen eines Feinimpfers mit einer Durchschnittskorngröße von etwa 15 bis 24 $\mu$m. wobei der Partikelanteil mit einem Durchmesser < 45 $\mu$m zwischen 80 und 85 Gew.-% liegt;
- Zugabe von etwa 35 bis 40 g/l Mahlimpfer und etwa 60 g/l rückgeführtem Feinimpfer aus dem Auslauf des Desaktivierungsabschnittes zu der gegebenenfalls vorher zwischengekühlten teilzersetzten Lauge aus dem Auslauf des Agglomerationsabschnittes;
- Ausrührung der teilzersetzten Lauge in einem Temperaturbereich zwischen 62 und 52 °C, bis das Molverhältnis in der Lauge mindestens 2,10 beträgt, wobei ein Feinimpfer erzeugt wird, bestehend aus desaktiviertem Mahlimpfer und frisch gefällten $Al(OH)_3$-Partikeln;
- Abtrennung des Feinimpfers, wobei eine Dünnlauge zurückbleibt;
- Rückführung etwa der Hälfte des Feinimpfers in den Agglomerationsabschnitt und des verbleibenden Restes in den Desaktivierungsabschnitt.

Das Wesen des erfindungsgemäßen Verfahrens und dessen mögliche vorteilhaften Ausgestaltungen und Weiterbildungen werden aus den Patentansprüchen, der Beschreibung und den Abbildungen offenbar bzw. nahegelegt.

## Kurze Beschreibung der Figuren

Figur 1   schematische Darstellung der Mosaik- und Radialpartikelstrukturen
Figur 2   Schema des Ausrührzyklus des Verfahrens gemäß der vorliegenden Erfindung
Figur 3   Elektronenmikroskop-Aufnahme des gemahlenen $Al(OH)_3$
Figur 4   Elektronenmikroskop-Aufnahme der Impferkristalle im Impfer-Desaktivierungs-Abschnitt.
Figur 5   Elektronenmikroskop-Aufnahme des Feinimpfers, wie er für die Agglomeration verwendet wird.
Figur 6   Elektronenmikroskop-Aufnahme der agglomerierten Partikel
Figur 7   Elektronenmikroskop-Aufnahme der Produkt-$Al(OH)_3$-Partikel

## Ausführliche Beschreibung der Erfindung

Das verbesserte Verfahren ermöglicht insbesondere die Herstellung von groberen Agglomeraten mit

EP 0 445 543 A1

vergrößertem mosaikartigem Charakter und erhöhter Partikelfestigkeit. Durch das verbesserte Verfahren wird das Verhältnis von rückgeführtem Al(OH)₃ zu Produkt-Al(OH)₃ erheblich verringert.

Im Mittelpunkt der vorliegenden Erfindung steht die unerwartete und überraschende Erkenntnis, daß Calciumionen in gemahlenen Al(OH)₃-Impferpartikeln keinen schädlichen Einfluß auf die Ausrührung von Al-(OH)₃ aus teilzersetzten alkalischen Alumintlaugen des Bayer-Prozesses ausüben. Daher können Calciumzugaben (vorzugsweise in Form von CaCO₃) zu dem Agglomerationsabschnitt des Bayer-Prozesses dazu genutzt werden, festere, kompaktere Agglomerate mit größerer Partikelgröße zu erzeugen, ohne nachteilige Auswirkungen auf andere Verfahrensschritte oder Reaktionen, insbesondere auf die Ausrührung von Al(OH)₃ aus teilzersetzten Laugen, zu erzeugen.

Es wird in der Aluminiumoxidindustrie allgemein akzeptiert, daß die Gegenwart kleiner Mengen von Calciumionen während der Ausrührung die Agglomeration feiner Al(OH)₃-Partikel fördert, wobei rundere, kompakte Agglomerate gebildet werden; vgl. z. B. "Effect of Calcium Ions on Agglomeration of Bayer Aluminum Trihydroxide", N. Brown, J. Crystal growth 92: 26-32, 1988, "Precipitation of Alumina Trihydrate from Bayer Pregnant Liquors", B. Gnyra, US Patent Nr. 3,906,084, erteilt 16.09.1975.

Calciumionen reagieren durch Adsorption an aktiven Stellen auf der Oberfläche von Al(OH)₃-Impferkristallen und durch Verhinderung des Kristallwachstums. Dies regt die Impferkristalloberflächen an, mehr Oberfläche zu erzeugen und ermöglicht eine Ausrührgeschwindigkeit, die die Aluminiumoxidübersättigung des Systems tragen kann. Ohne an der Theorie festzuhalten, glaubt man, daß dies zu einer "Aufrauhung" der Impferkristalloberflächen führt, was die Agglomeration von Al(OH)₃-Partikeln während der nachfolgenden Ausrührung fördert.

Auf der anderen Seite wird es allgemein akzeptiert, daß Calcium ein Ausrührgift ist und nur in geringen Mengen toleriert werden kann, damit keine Verluste an Laugenproduktivität auftreten. Die Fähigkeit des Ausrührsystems, sich von einer Ausgangsmenge an Calcium zu "erholen", erfordert eine Lauge mit hoher Aluminiumoxidübersättigung (d. h. ein niedriges Molverhältnis). Das System kann sich bei einer Lauge mit hohem Molverhältnis also nicht erholen, und die Ausrührausbeute könnte auf einem sehr niedrigen Niveau bleiben.

Überraschenderweise wurde gefunden, daß Calcium in gemahlenem Al(OH)₃ die Laugenproduktivität in alkalischen Aluminatlaugen mit hohem Molverhältnis nicht nachteilig beeinflußt. Folglich kann durch Verwendung von Calcium in einem Verfahren nach EP-A 0 344 469 das Agglomerationspotential des Ausrührsystems erhöht werden. Dies ermöglicht die Verwendung von feinerem Impfer und/oder erhöhter Feinimpfermenge in der Agglomeration, wodurch die Produktpartikelgröße und der Grad an mosaikartigem Charakter erhöht werden, ohne Verluste bei der Laugenproduktivität oder Partikelfestigkeit. Das Calcium kann in einer Konzentration von etwa 10 mg/l bis 100 mg/l zugegeben werden. Calciumchlorid, Calciumoxid, Calciumcarbonat, Calciumhydroxid, Calciumaluminat oder Mischungen daraus können für das Verfahren der vorliegenden Erfindung auch verwendet werden.

Gemäß dem Verfahren der vorliegenden Erfindung wird eine alkalische Lauge des Bayer-Prozesses mit einer Temperatur von mindestens 75 °C und einem Molverhältnis ($Na_2O$ zu $Al_2O_3$) von weniger als 1,6 in zwei Ströme aufgeteilt (im Volumenverhältnis 50:50). Danach werden feine Al(OH)₃-Partikel, die mindestens 50 Gew.-% an Partikeln mit einer Duchschnittspartikelgröße < 45 $\mu$m Durchmesser enthalten, zu einem der aufgeteilten Ströme als Feinimpfer zugegeben, bis der Strom eine Partikelkonzentration zwischen etwa 20 g/l und 80 g/l enthält, und eine calciumhaltige Verbindung wird zum gleichen Strom wie die feinen Al(OH)₃-Partikel zugegeben, bis der Strom eine Konzentration der Calciumverbindung zwischen etwa 10 und 100 mg/l aufweist. Die Lauge mit den Partikeln und dem Calcium wird dann in den Agglomerationsabschnitt eingeführt und unter Kühlung ausgerührt, bis das Molverhältnis mindestens 2,10 erreicht, wodurch agglomerierte Partikel entstehen. In diesem Abschnitt weisen die Agglomerate zu etwa 6-10 % eine Partikelgröße < 45 $\mu$m auf. Eine Kühlung der Suspension erfolgt in diesem Schritt im wesentlichen nur durch natürliche Abkühlung. Dadurch wird eine Zerkleinerung der Agglomerate beim Umpumpen durch einen Wärmetauscher vermieden.

Die Partikel werden danach aus dem ersten Strom abgetrennt, wobei eine teilzersetzte Lauge zurückbleibt. Die agglomerierten Partikel, die durch Ausrührung aus dem ersten Strom erzeugt wurden und < 10 Gew.-% Partikel mit einer Durschnittsgröße < 45 $\mu$m Durchmesser enthalten, werden dann zum zweiten Laugenstrom als Grobimpfer zugegeben, bis der zweite Strom etwa zwischen 140 g/l und 280 g/l der Partikel enthält. Der zweite Strom wird dann dem Kristallwachstumsabschnitt des Verfahrens zugeführt. Nach etwa 6 - 8 Stunden Verweilzeit im Wachstumsabschnitt wird der zweite Strom zwischengekühlt, wobei die Temperatur um mindestens 3 °C herabgesetzt wird. Die Zwischenkühlung erfolgt in einer externen Vorrichtung, wie z. B. einen Plattenwärmetauscher oder einen Rohrbündelwärmetauscher.

Bei der Ausrührung im Wachstumsabschnitt wachsen die ausgerührten Kristallmassen und werden verfestigt, wodurch Al(OH)₃-Produktpartikel entstehen, die vom zweiten Strom abgetrennt und ausgeschleust

5

werden, wobei Dünnlauge zurückbleibt. Ein Teil der Produktpartikel werden gemahlen, bis etwa 85 % der Partikel eine Partikelgröße von < 45 $\mu$m Durchmesser aufweisen, mit einem Durchschnittspartikeldurchmesser von etwa 15 - 24 $\mu$m. Der gemahlene Impfer (Mahlimpfer) wird dann zu der gekühlten, teilweise zersetzten Lauge aus dem Agglomerationsabschnitt zugegeben, bis die Lauge etwa zwischen 20 g/l bis 50 g/l der gemahlenen Partikel enthält. Die Lauge wird dann in einen Desaktivierungsabschnitt eingeführt. Hier wird die Lauge auf einer Temperatur zwischen etwa 52 °C und 62 °C gehalten, bis das Molverhältnis von $Na_2O$ zu $Al_2O_3$ > 2,5 beträgt. Der dabei erzeugte deskativierte gemahlene Impfer und der frische Niederschlag werden aus der Lauge abgetrennt, wobei Dünnlauge zurückbleibt. Ein Teil des auf diese Weise erhaltenen Feinimpfers wird in den Agglomerationsabschnitt zurückgeführt, wobei im ersten Teilstrom eine Feinimpferkonzentration von 20 bis 100 g/l eingestellt wird. Der andere Teil des Feinimpfers wird in den Desaktivierungsabschnitt zurückgeführt.

In einer ersten Reihe von Laborversuchen unter Verwendung von teilzersetzter Lauge wurde das Verhalten von gemahlenem $Al(OH)_3$ untersucht, um die optimale Einführung des Materials in den Impfer-"Desaktivierungs"-Abschnitt des Verfahrens zu erleichtern.

Die folgenden Angaben basieren auf Laborversuchen unter industrieüblichen Ausrührbedingungen, wobei ohne tatsächliche Simulation der Hydrodynamik bei der Ausrührung zuverlässige Daten über die Laugenproduktivität und Partikelgröße erhalten wurden.

Dementsprechend wurden die Versuche in Polypropylen Flaschen (600 ml) durchgeführt, die zu 3/4 gefüllt waren und bei 12 RPM in einem Wasserbad mit Temperaturregelung Kopf über Fuß rotierten. Die Partikelgrößen wurden mit Hilfe eines Malvern Instruments Master Sizer 20 (Malvern Instruments, England) analysiert.

Die Ergebnisse der Versuche waren wie folgt:

**Ausrührung von Al(OH)$_3$ in einer teilzersetzten Lauge [Versuch 1]**

**Beginn (Einlauf)**

Laugenzusammensetzung:

| | | |
|---|---|---|
| Na$_2$O alkalisch | (g/l) | 129 |
| Na$_2$O carbonat | (g/l) | 15,1 |
| Al$_2$O$_3$ | (g/l) | 102 |
| Na$_2$O alkalisch/Al$_2$O$_3$ | | 2,08 (Molverhältnis) |

Ausrührbedingungen:

| | | |
|---|---|---|
| Verweilzeit | (h) | 25 |
| Temperatur | (°C) | 62 - 56 |

| Impfbedingungen | (1) | (2) | (3) | (4) |
|---|---|---|---|---|
| Durchschnittsimpfergröße (µm) | 20 | 20 | 20 | 20 |
| Calciumgehalt (% CaO) | 0,029 | 0,029 | 0,029 | 0,029 |
| Impfermenge (g/l) [gemahlenes Al(OH)$_3$] Erläuterung siehe *) | 25 | 50 | 100 | 100 |
| Calciumzugabe (mg/l CaO) | 0 | 0 | 0 | 0 |

6

**Ende (Auslauf)**

Laugenproduktivität
(g/l $Al_2O_3$)                13,8        22,0        28,7      6,20
durschnittliche Produkt-

| Impfbedingungen | | (1) | (2) | (3) | (4) |
|---|---|---|---|---|---|
| durschnittliche | | | | | |
| Impfergröße (μm) | | 20 | 20 | 20 | 20 |
| Impfermenge (g/l) | | 25 | 50 | 100 | 100 |
| Calciumgehalt (% CaO) | | 0,029 | 0,029 | 0,029 | 0,029 |
| Calciumzugabe (mg/l CaO) | | 0 | 0 | 0 | 0 |

**Ende (Auslauf)**

| Laugenproduktivität | | | | | |
|---|---|---|---|---|---|
| (g/l $Al_2O_3$) | | 10,5 | 14,7 | 17,2 | 5,20 |
| durchschnittliche | | | | | |
| Partikelgröße (μm) | | 22 | 19 | 18 | 22 |

**Aurührung von $Al(OH)_3$ in einer teilzersetzten Lauge [Versuch 2, Zyklus 2]**

**Beginn (Auslauf)**

Laugenzusammensetzung

| $Na_2O$ alkalisch | (g/l) | 138 |
|---|---|---|
| $Na_2O$ carbonat | (g/l) | 15,5 |
| $Al_2O_3$ | (g/l) | 106 |
| $Na_2O$ alkalisch/$Al_2O_3$ | | 2,14 (Molverhältnis) |
| CaO | (mg/l) | < 1 |

Ausrührbedingungen:

| Verweilzeit | (h) | 25 |
|---|---|---|
| Temperatur | (°C) | 62 - 56 |

| Impfbedingungen | (1) | (2) | (3) | (4) |
|---|---|---|---|---|
| Durchschnittliche | | | | |
| Partikelgröße (μm) | 22 | 19 | 18 | 22 |
| Impfermenge (g/l) | 25 | 50 | 100 | 100 |

[Produkte aus Zyklus 1
keine Calciumzugabe]

**Ende (Auslauf)**

| Laugenproduktivität | | | | |
|---|---|---|---|---|
| (g/l $Al_2O_3$) | 6,67 | 12,7 | 16,0 | 8,67 |
| durchschnittliche | | | | |
| Partikelgröße (μm) | 22 | 23 | 20 | 22 |

**Ausrührung von $Al(OH)_3$ in einer teilzersetzten Lauge [Versuch 2, Zyklus 1]**

**Beginn (Einlauf)**

Laugenzusammensetzung:

| $Na_2O$ alkalisch | (g/l) | 121 |
|---|---|---|
| $Na_2O$ carbonat | (g/l) | 162,9 |
| $Al_2O_3$ | (g/l) | 87,2 |
| $Na_2O$ alkalisch/$Al_2O_3$ | | 2,28 (Molverhältnis) |

Ausrührbedingungen:

| Verweilzeit | (h) | 25 |
|---|---|---|
| Temperatur | (°C) | 62 - 56 |

| Impfbedingungen | (1) | (2) | (3) | (4) |
|---|---|---|---|---|
| durchschnittliche | | | | |
| Impfergröße (μm) | 20 | 20 | 20 | 20 |
| Impfermenge (g/l) | 25 | 50 | 100 | 100 |
| Calciumgehalt | | | | |
| (% CaO) | 0,029 | 0,029 | 0,029 | 0,029 |
| Calciumzugabe | | | | |
| (mg/l CaO) | 0 | 0 | 0 | 0 |

**Ende (Auslauf)**

Laugenproduktivität

| | | | | |
|---|---|---|---|---|
| (g/l Al$_2$O$_3$) | 10,5 | 14,7 | 17,2 | 5,20 |
| durchschnittliche | | | | |
| Partikelgröße (μm) | 22 | 19 | 18 | 22 |

**Ausrührung von Al(OH)$_3$ in einer teilzersetzten Lauge [Versuch 2, Zyklus 2]**

**Beginn (Einlauf)**

Laugenzusammensetzung

| | | | |
|---|---|---|---|
| Na$_2$O alkalisch | (g/l) | 138 | |
| Na$_2$O carbonat | (g/l) | 16,5 | |
| Al$_2$O$_3$ | (g/l) | 91,5 | |
| Na$_2$O alkalisch/Al$_2$O$_3$ | | 2,26 | (Molverhältnis) |
| CaO | (mg/l) | < 1 | |

Ausrührbedingungen:

| | | |
|---|---|---|
| Verweilzeit | (h) | 25 |
| Temperatur | (°C) | 62 - 56 |

| Impfbedingungen | (1) | (2) | (3) | (4) |
|---|---|---|---|---|
| durchschnittliche | | | | |
| Impfergröße (μm) | 23 | 23 | 20 | 22 |
| Impfermenge (g/l) | 25 | 50 | 100 | 100 |
| (Produkte aus | | | | |
| Zyklus 1 | | | | |
| ohne Calciumzugabe) | | | | |

**Ende (Auslauf)**

Laugenproduktivität

| | | | | |
|---|---|---|---|---|
| (g/l Al$_2$O$_3$) | 4,60 | 10,3 | 15,3 | 11,2 |
| durchschnittliche | | | | |
| Partikelgröße (μm) | 26 | 21 | 20 | 22 |

Im Versuch 1 war das Molverhältnis der Ausgangslauge (2,08) niedrig genug, um die sekundäre Keimbildung durch die gemahlenen Al(OH)$_3$-Impferkristalle anzuregen. In der Regel war die Durchschnittspartikelgröße kleiner als die des Ausgangsimpfers. Die erhaltenen Laugenproduktivitäten (gemessen an der Partikelproduktion) sollten daher höher sein als diejenigen, die bei fehlender sekundärer Keimbildung erzielt wurden.

Die Zugabe von 10 mg/l CaO (zugegeben als entsprechende Menge CaCO$_3$, d. h. 18 mg/l) verlangsamte die Ausrührgeschwindigkeit und verhinderte die sekundäre Keimbildung durch Adsorption auf den Impferkristallen. Auf der anderen Seite hatte die Gegenwart von großen Mengen Calcium innerhalb der Ausgangsimpferkristalle keine nennenswerten nachteiligen Auswirkungen auf die Laugenproduktivität.

Ausgehend von den gleichen Impferpartikeln, zeigten die Ergebnisse des Versuchs 2 - Zyklus 1, daß bei einem höheren Molverhältnis (2,28) geringe oder gar keine sekundäre Keimbildung auftrat und die Laugenproduktivität niedriger war. Die negative Auswirkung von zugegebenem Calcium auf die Laugenproduktivität lag auf der Hand.

Im Versuch 2 wurden 3 Zyklen durchgeführt. Bei der Rückführung des Produkts von Zyklus 1 als Impfer für Zyklus 2 wurde eine allmähliche Verringerung der Laugenproduktivität festgestellt, da die Al(OH)$_3$-Partikel dazu neigten, größer und inaktiver zu werden. Dieser Effekt wurde jedoch am wenigsten bei der höchsten verwendeten Impfermenge (100 g/l) festgestellt. Der anfängliche negative Effekt der Zugabe von Calcium wurde allmählich überwunden, da die Aktivität der Impferpartikel zurückgewonnen wurde.

Äußerst stabile Bedingungen für einen stetigen Rückführungsprozeß ergaben sich bei einer Impfermenge von 100 g/l. Während der drei Zyklen des Versuchs 2 trat keine bedeutende Vergröberung der anfangs gemahlenen Al(OH)$_3$-Impferpartikel auf.

Das 3-stufige Ausrührverfahren der vorliegenden Erfindung nutzt also den Effekt von zugegebenem Calcium, während es gleichzeitig die geringere Aktivität des Mahlimpfers nutzt, um die Ausrührziele wie eine hohe Laugenproduktivität (d. h. hohe Al(OH)$_3$-Ausbeute) und ein Produkt in Form von groben Partikel mit einer verfestigten mosaikartigen Struktur zu erzielen.

Durch die vorliegende Erfindung können einige Verbesserungen erzielt werden, verglichen mit dem Verfahren der EP-A 0 344 469

- Feinerer Mahlimpfer - je feiner der Impfer, desto größer ist der Grad an mosaikartigem Charakter des Endprodukts, vorausgesetzt, daß weder die Partikelgröße noch die Festigkeit verloren gehen. Beispielsweise eine durchschnittliche mosaikartige Partikelgröße von 90 $\mu$m. bestehend aus Einzelkristallen von a) 20 $\mu$m [gemäß der vorliegenden Erfindung] und b) 25 $\mu$m [gemäß EP-A 0 344 469]. Setzt man für die Berechnung Kugeln voraus, so enthält das 90 $\mu$m Produktpartikel, bestehend aus 20 $\mu$m Kristallen, doppelt so viele Kristalle wie die 90 $\mu$m Produktpartikel aus 25 $\mu$m Kristallen. Deshalb ist defintionsgemäß die mosaikartige Struktur doppelt so groß (d. h. doppelt so viele feine Kristalle sind zu einem Partikel mit einer Größe von 90 $\mu$m verbunden).
- Feinerer Ausrührzyklus gemessen an der größeren Oberfläche für die Ausrührung von Al(OH)$_3$, d. h. je feiner die Einzelkristalle innerhalb des Ausrührverfahrens sind, desto größer ist die Laugenproduktivität. Dies führt zu einer Reduzierung der Kosten pro Volumeneinheit. In der Praxis könnte dies dazu führen, daß die Endtemperatur im Ausrührverfahren erhöht wird (d. h. geringere Kühlung) um die Probleme von Verunreinigungen, wie z. B. Natriumoxalat, das am kalten Ende des Zyklus aus der Lauge auskristallisiert, zu verringern. Festes Natriumoxalat führt zu einer Erhöhung der Al(OH)$_3$-Partikelgröße und senkt das Agglomerationspotential des Systems.
- Niedrigerer Bedarf der Feststoffrückführung. Alle Partikel, die die Produktgrößenabmessungen erreichen, werden aus dem Prozeß entfernt, wobei eine kleinere Menge (15 %) des Produktstroms über die Mahlstufe wieder dem Prozeß zugeführt wird.

Eine weitere Neuheit beim verbesserten Verfahren der vorliegenden Erfindung ist der Rückführungsstrom innerhalb des Desaktivierungsabschnitts. Dies normalisiert die gemahlenen Impferkristalle, bevor sie in die Agglomerationsstufe des Prozesses übergehen, d. h. es wird eine vollständigere Desaktivierung erzielt.

Die vorliegende Erfindung ist weiter unten anhand spezieller Beispiele beschrieben, die die Erfindung, ohne sie jedoch einzuschränken, näher erläutern sollen.

Jeder der drei Ausrührabschnitte des Verfahrens der vorliegenden Erfindung soll nun in Verbindung miteinander beschrieben werden, d. h. das Produkt aus der Impfer-"Desaktivierung" wird im Agglomerationsabschnitt verwendet, und das Produkt aus dem Agglomerationsabschnitt wird zur Vergrößerung der Kristalle verwendet, wobei ein Teil des Endkristallprodukts gemahlen wird und in den Impfer-"Desaktivierungs"-Abschnitt rückgeführt wird, um den Kreislauf zu schließen.

## Impfer-"Desaktiverung" (Beispiel 3)

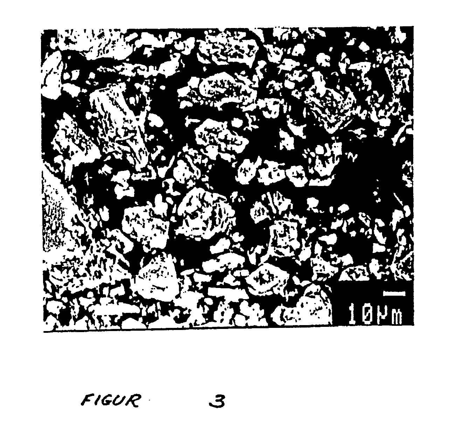

Al(OH)$_3$-Impfer wurde durch Naßmahlen eines Teils des Produktgrößen Al(OH)$_3$ zu feinen Impferabmessungen in einer Kugelmühle hergestellt, d. h. 80 - 85 % < 45 $\mu$m; vgl. Fig. 3.

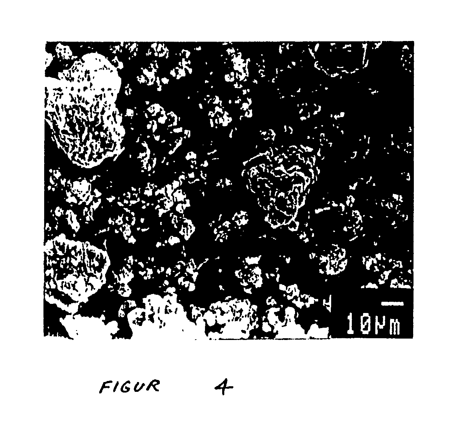

37,5 g/l der unregelmäßig geformten in einer Kugelmühle gemahlenen Al(OH)$_3$-Impferpartikel wurden in den Impfer-"Desaktivierungs-Abschnitt zusammen mit 60 g/l des rückgeführten Kristallmaterials aus Versuch 2- Zyklus 3- Nr. 3 eingeführt; Fig. 4 zeigt diese Mischung.

Die relevanten physikalischen und chemischen Parameter der Ausgangslauge in der Lauge und der Lauge und der mit dem Verfahren erzeugten Kristalle sowei der verbleibenden Lauge werden unten angegeben.

## Beginn (Einlauf)

### Laugenzusammensetzung

| | | |
|---|---|---|
| $Na_2O$ alkalisch | (g/l) | 137,5 |
| $Na_2O$ carbonat | (g/l) | 15 |
| $Na_2O$ | (g/l) | 102 |
| $Na_2O$ alkalisch/$Al_2O_3$ | | 2,22 (Molverhältnis) |
| Organischer Kohlenstoff (g/l) | | 20 |
| CaO | (mg/l) | 1 |

### Ausrührbedingungen

| | | |
|---|---|---|
| Verweilzeit | (h) | 25 |
| Temperatur | (°C) | 62 - 65 |

### Impferbedingungen:

| | |
|---|---|
| Impfergröße | 20 μm |
| Impfermenge | 97,5 g/l |
| | [37,5 g/l Mahlimpfer + 60 g/l rückgeführt] |
| Impfer CaO Gehalt | 0,029 % Mahlimpfer |
| | 0,020 % rückgeführt |

## Ende (Auslauf)

### Zusammensetzung

| | | |
|---|---|---|
| $Na_2O$ alkalisch | (g/l) | 140 |
| $Al_2O_3$ | (g/l) | 87,2 |
| $Na_2O$ alkalisch/$Al_2O_3$ | | 2,64 (Molverhältnis) |
| CaO (mg/l) | | < 1 |

| | |
|---|---|
| Laugenproduktivität | 15 g/l $Al_2O_3$ |
| Produktgröße (durchschnittl.) | 21 μm |
| CaO-Gehalt | 0,021 % |

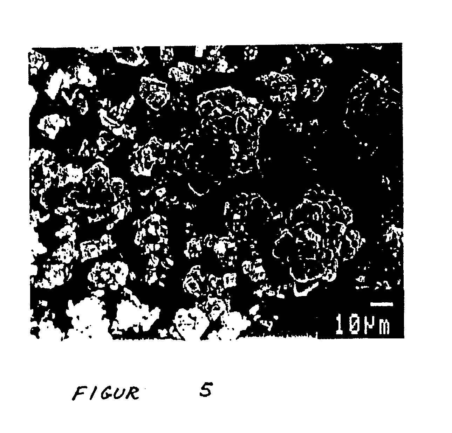

Die erhaltenen Partikel aus der Impfer-"Desaktivierung" sind in Fig. 5 dargestellt. Dies ist der Feinimpfer, der teilweise der Agglomeration zugeführt wird.

**Agglomeration [Versuch 4]**

Im Agglomerationsabschnitt des Verfahrens wurde der Feinimpfer aus der Impfer-"Desaktivierung" zu einer Partikelgröße von etwa 20 $\mu$m auf etwa 85 $\mu$m agglomeriert. Die Versuchsbedingungen wie hohe Ausgangstemperatur, hohe Aluminiumoxidübersättigung und feine, unregelmäßig geformte Impferkristalle förderten die schnelle Partikelvergröberung. Die Zugabe einer kleinen Menge $CaCO_3$ (60 mg/l als CaO) förderte ferner die Agglomeration und die Bildung von runderen, kompakten Partikeln.

## Beginn (Einlauf)

### Laugenzusammensetzung:

| | | |
|---|---|---|
| $Na_2O$ alkalisch | (g/l) | 130 |
| $Na_2O$ carbonat | (g/l) | 15 |
| $Al_2O_3$ | (g/l) | 156 |
| $Na_2O$ alkalisch/$Al_2O_3$ | | 1,37 (Molverhältnis) |
| CaO | (mg/l) | 2 |

### Ausrührbedingungen:

| | | |
|---|---|---|
| Verweilzeit | (h) | 25 |
| Temperatur | (°C) | 76 - 68 |

### Impferbedingungen:

| | |
|---|---|
| Impfergröße | 21 $\mu$m |
| Impfermenge | 60 g/l |
| Impfer CaO Gehalt | 0,021 % |
| $CaCO_3$ | 60 mg/l (als CaO) |

## Ende (Auslauf)

### Laugenzusammensetzung:

| | | |
|---|---|---|
| $Na_2O$ alkalisch | (g/l) | 137,5 |
| $Al_2O_3$ | (g/l) | 102 |
| $Na_2O$ alkalisch/$Al_2O_3$ | | 2,22 (Molverhältnis) |
| CaO (mg/l) | | < 1 |

| | |
|---|---|
| Laugenproduktivität | 60 g/l $Al_2O_3$ |
| Produktgröße (durchschnittl.) | 7 % < 45 $\mu$m |
| CaO - Gehalt | 0,049 % |

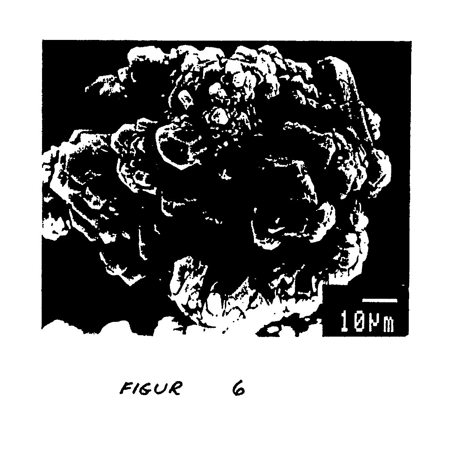

Fig. 6 zeigt die Produktpartikel aus der Agglomeration. Die Verweilzeit in der Agglomeration war relativ lang, um eine Laugenproduktivität > 55 g/l $Al_2O_3$ zu erzielen (d. h. ein Molverhältnis > 2,10. Sonst würde die teilweise zersetzte Dünnlauge, die der Impfer-"Desaktivierung" über einen Kühlungsabschnitt zugeführt wird, eine Aluminiumoxidübersättigung bei 62 °C aufweisen, die so hoch ist, daß eine sekundäre Keimbildung durch das frisch in einer Kugelmühle gemahlene $Al(OH)_3$ erfolgt.

## Wachstum [Versuch 5]

Bei einer erhöhten Impfermenge von 150 g/l und einer groben Körnung der gut geformten $Al(OH)_3$-Partikel ist die weitere Agglomeration während der Ausrührung im Wachstumsabschnitt gering. Die hohe Temperatur der alkalischen Aluminatlauge und den angenommenen Temperaturverlauf garantierten, daß eine sekundäre Keimbildung nicht auftrat. Daher war eine weitere Erhöhung in der Größe der mosaikartigen Partikel hauptsächlich auf das Kristallwachstum zurückzuführen, was den Partikeln eine zusätzliche Festigkeit verlieh. Die relevanten physikalischen und chemischen Eigenschaften der verwendeten Lauge und die relevanten physikalischen und chemischen Informationen sowie die Informationen bezüglich der Ausbeute für die mit dem Verfahren erzeugten Materialien sind unten dargelegt:

**Beginn (Einlauf)**

Laugenzusammensetzung:

| | | |
|---|---|---|
| Na$_2$O alkalisch | (g/l) | 130 |
| Na$_2$O carbonat | (g/l) | 15 |
| Al$_2$O$_3$ | (g/l) | 156 |
| Na$_2$O alkalisch/Al$_2$O$_3$ | | 1,37 (Molverhältnis) |
| CaO (mg/l) | | 2 |

Ausrührbedingungen:

| | | |
|---|---|---|
| Verweilzeit (h) | | 50 |

Temperaturverlauf

76 °C

↘ 72 °C

− 6 °C Temperaturabsenkung in der Zwischenkühlung

66 °C

42 h

↘ 56 °C

Impfbedingungen:

| | |
|---|---|
| Impfergröße | 7 % < 45 μm |
| Impfermenge | 150 g/l |
| Impfer CaO-Gehalt | 0,049 |

**Ende (Auslauf)**

Laugenzusammensetzung:

| | | |
|---|---|---|
| Na$_2$O alkalisch | (g/l) | 140 |
| Al$_2$O$_3$ | (g/l) | 87,2 |
| Na$_2$O alkalisch/Al$_2$O$_3$ | | 2,264 (Molverhältnis) |
| CaO (mg/l) | | < 1 |

15

| Laugenproduktivität | 74,9 g/l $Al_2O_3$ |
|---|---|
| Produktgröße | 3 % < 45 μm |
| CaO-Gehalt | 0,029 % |
| $Na_2O$-Gehalt | 0,34 % |
| Attrition Index | 8 % |

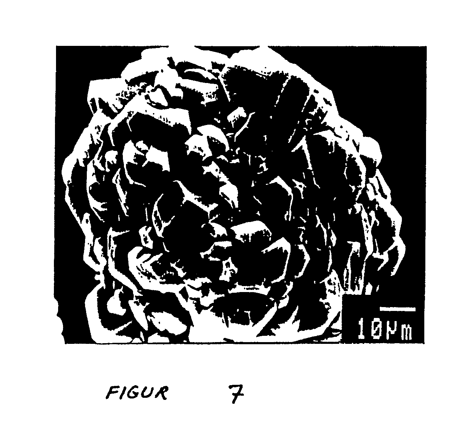

Die Produktpartikel, dargestellt in Fig. 7, sind sehr grob (ca. 3 % < 45 $\mu$m) und sehr rund geformt. Zudem weisen sie aufgrund der Verwendung eines äußerst feinen Impfers eine entsprechend hohe Anzahl kleiner Einzelkristalle und damit eine stark ausgeprägte mosaikartige Struktur auf. Nach Durchführung des Abriebtests (Attrition Index Test) weisen lediglich ca. 10 Gew.-% der Produktpartikel einen Durchmesser < 45 $\mu$m auf. Das Produkt erfüllt damit die für eine hohe Beständigkeit bei der Kalzinierung erforderlichen Voraussetzungen.

Zum Vergleich wurde das Verfahren entsprechend Versuch 5 wiederholt, ohne $CaCO_3$-Zugabe im Agglomerationsabschnitt. Dabei wurde bei annähernd gleicher Laugenproduktivität ein deutlich weniger grobes Produkt (6 % < 45 $\mu$m) erhalten. Die Mosaikstruktur bleib unter diesen Bedingungen weitgehend unverändert. Das erzeugte Produkt ist deutlich schwächer (AI = 18 %) und weist nach Durchführung des Abriebtests eine erheblich verringerte Korngröße auf (ca. 23 % < 45 $\mu$m). Die gestellten Anforderungen an das Produkt werden hier nicht erfüllt. Soll ohne die Verwendung von Ca-Verbindungen ein Produkt erzeugt werden, das auch nach der Durchführung des Abriebtests eine ausreichend hohe Korngröße (ca. 10 Gew.-% < 45 $\mu$m) aufweist, müßte die eingesetzte Feinimpfermenge deutlich verringert werden. Die dadurch zwangsläufig verminderte Laugenproduktivität müßte kompensiert werden, z. B. durch bedeutend höhere Verweilzeiten und/oder stärkere Kühlung bei der Ausrührung. Dies würde naturgemäß zu einem erheblichen Anstieg der Kosten sowie des Energiebedarfs führen.

Verglichen mit dem Verfahren gemäß EP-A 0 344 469 weist das erfindungsgemäße Verfahren u. a. die folgenden wesentlichen Vorteile auf:

- Durch den Einsatz von Ca-Verbindungen wird die Verwendung eines feineren Impfers ermöglicht. Dies führt zu einem Produkt mit einer stärker ausgeprägten mosaikartigen Struktur, bei unvermindert hoher Laugenproduktivität.
- Die als Impfer rückgeführte Produktmenge wird von 25 % auf etwa 15 % reduziert.

Der Attrition Index des Produktes nach vorliegender Erfindung kann zwar geringfügig höher sein, als bei dem Verfahren nach EP-A 0 344 469. Das erfindungsgemäß erzeugte Produkt ist jedoch deutlich gröber, so daß es nach der Durchführung des Abriebtests eine gleich hohe Korngröße (ca. 10 Gew.-% < 45 $\mu$m) aufweist.

## Patentansprüche

1. Verfahren zur Herstellung von grobkörnigen Aluminiumhydroxid-Partikeln aus einer alkalischen Aluminatlauge des Bayer-Prozesses, das die folgenden Schritte umfaßt:

    a) Aufteilung einer übersättigten alkalischen Aluminatlauge des Bayer-Prozesses in einen ersten und zweiten Teilstrom

    b) Einleiten des ersten Teilstromes in einen Agglomerationsabschnitt unter Zugabe eines Feinimpfers, bestehend aus einem desaktivierten Mahlimpfer und frisch gefällten $Al(OH)_3$-Partikeln

    c) Ausrühren des ersten Teilstromes, bis ein Molverhältnis $Na_2O$ zu $Al_2O_3$ von mindestens 2,10 in der Lauge erreicht ist und ein Grobimpfer, bestehend aus agglomerierten $Al(OH)_3$-Partikeln, gebildet wird

    d) Abtrennung des Grobimpfers aus dem ersten Teilstrom, wobei eine teilzersetzte Lauge zurückbleibt

    e) Zugabe des Grobimpfers in den zweiten Teilstrom, der in den Wachstumsabschnitt eingeleitet wird

    f) Ausrühren des zweiten Teilstromes unter Bildung von $Al(OH)_3$-Produktpartikeln

    g) Abtrennung der $Al(OH)_3$-Produktpartikel aus dem zweiten Teilstrom, wobei eine Dünnlauge zurückbleibt

    h) Mahlen eines Teils der $Al(OH)_3$-Produktpartikel zu einem Mahlimpfer mit den Abmessungen eines Feinimpfers

i) Zugabe des Mahlimpfers zu der teilzersetzten Lauge [aus Verfahrensschritt d)], die in einen Desaktivierungsabschnitt eingeleitet wird

j) Ausrühren der teilzersetzten Lauge unter Bildung eines Feinimpfers, bestehend aus desaktiviertem Mahlimpfer und frisch gefällten $Al(OH)_3$-Partikeln

k) Abtrennung des Feinimpfers, wobei Dünnlauge zurückbleibt

l) Rückführung des Feinimpfers in den ersten Teilstrom .

dadurch gekennzeichnet, daß

A) dem ersten Teilstrom im Agglomerationsabschnitt neben dem Feinimpfer zusätzlich eine calciumhaltige Verbindung zugegeben wird

B) der zweite Teilstrom im Wachstumsabschnitt ausgerührt wird, bis ein Molverhältnis $Na_2O$ zu $Al_2O_3$ von mindestens 2,10 in der Lauge erreicht ist

C) bei der Mahlung entsprechend Verfahrensstufe h) ein Mahlimpfer mit einer Duchschnittskorngröße < 25 $\mu$m erzeugt wird

D) die teilzersetzte Lauge entsprechend Verfahrensschritt j) ausgerührt wird, bis ein Molverhältnis $Na_2O$ zu $Al_2O_3$ von mindestens 2,10 in der Lauge erreicht ist

E) ein Teil des Feinimpfers in den Agglomerationsabschnitt und der andere Teil in den Desaktivierungsabschnitt zurückgeführt wird.

2. Verfahren nach Anspruch 1, dadurch gekennzeichnet, daß die Aluminatlauge in einem Volumenverhältnis von 50:50 auf die beiden Teilströme aufgeteilt wird.

3. Verfahren nach einem der vorhergehenden Ansprüche, dadurch gekennzeichnet, daß die durchschnittliche Korngröße des Feinimpfers 15 bis 24 $\mu$m beträgt, wobei 85 Gew.-% der Feinimpferpartikel einen Durchmesser < 45 $\mu$m aufweisen.

4. Verfahren nach einem der vorhergehenden Ansprüche, dadurch gekennzeichnet, daß der Anteil an Partikeln mit einer Korngröße < 45 $\mu$m im Grobimpfer etwa 6 bis 10 Gew.-% und im $Al(OH)_3$-Produkt etwa 2 bis 5 Gew.-% beträgt.

5. Verfahren nach einem der vorhergehenden Ansprüche, dadurch gekennzeichnet, daß der Mahlimpfer in einer Menge von 20 bis 50 g/l zu der teilzersetzten Lauge gegeben wird.

6. Verfahren nach einem der vorhergehenden Ansprüche, dadurch gekennzeichnet, daß der in den Desaktivierungsabschnitt rückgeführte Anteil des Feinimpfers in einer Menge von 20 bis 100 g/l zu der teilzersetzten Lauge gegeben wird.

7. Verfahren nach einem der vorhergehenden Ansprüche, dadurch gekennzeichnet, daß der in den Agglomerationsabschnitt rückgeführte Teil des Feinimpfers in einer Menge von 20 bis 80 g/l zu dem ersten Teilstrom gegeben wird, wobei mindestens 50 Gew.-% der Feinimpferpartikel eine Korngröße < 45 $\mu$m aufweisen.

8. Verfahren nach einem der vorhergehenden Ansprüche, dadurch gekennzeichnet, daß die Calciumverbindung aus der Gruppe von Calciumcarbonat, Calciumoxid, Calciumhydroxid, Calciumaluminat und Calciumchlorid und Mischungen daraus ausgewählt wird.

9. Verfahren nach einem der vorhergehenden Ansprüche, dadurch gekennzeichnet, daß der Grobimpfer in einer Menge von 140 bis 280 g/l zu dem in den Wachstumsabschitt eingeleiteten zweiten Teilstrom gegeben wird, wobei nicht mehr als 10 Gew.-% der Grobimpferpartikel eine Korngröße < 45 $\mu$m aufweisen.

10. Verfahren nach einem der vorhergehenden Ansprüche, dadurch gekennzeichnet, daß der zweite Teilstrom innerhalb des Wachstumsabschnittes zwischengekühlt wird.

11. Verfahren nach Anspruch 10, dadurch gekennzeichnet, daß die Zwischenkühlung nach einer Verweilzeit von etwa 6 bis 8 Stunden vorgenommen wird, wobei die Temperatur um mindestens 3 °C abgesenkt wird.

12. Verfahren nach einem der Ansprüche 10 und 11, dadurch gekennzeichnet, daß die Zwischenkühlung in einer externen Vorrichtung erfolgt.

13. Verfahren nach einem der vorhergehenden Ansprüche, dadurch gekennzeichnet, daß die feststofffreie teilzersetzte Lauge vor dem Einleiten in den Desaktivierungsabschnitt um mindestens 3 °C abgekühlt wird.

14. Verfahren nach einem der vorhergehenden Ansprüche, dadurch gekennzeichnet, daß die Desaktivierung des Mahlimpfers in einem Temperaturbereich zwischen 52 und 62 °C erfolgt.

MOSAIKARTIG

RADIAL

FIGUR 1

FIGUR 2

FIGUR 3

FIGUR 4

FIGUR 5

FIGUR   6

FIGUR 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 051 222  (GNYRA) <br> * Spalte 4, Zeilen 3 - 5; Ansprüche 12-26; Figur 1 * <br> – – – | 1-14 | C 01 F 7/14 |
| D,A | EP-A-0 344 469  (VEREINIGTE ALUMINIUM-WERKE) <br> * das ganze Dokument * <br> – – – | 1-14 | |
| D,A | US-A-3 906 084  (GNYRA) <br> – – – – – | | |

RECHERCHIERTE SACHGEBIETE (Int. Cl.5)

C 01 F

Der vorliegende Recherchenbericht wurde für alle Patentansprüche erstellt

| Recherchenort | Abschlußdatum der Recherche | Prüfer |
|---|---|---|
| Den Haag | 18 April 91 | ZALM W.E. |